# EUROPÄISCHE PATENTSCHRIFT

(11) **EP 2 652 295 B1**
(45) Veröffentlichungstag und Bekanntmachung des Hinweises auf die Patenterteilung: **11.06.2014**
(21) Anmeldenummer: 11826163.5
(22) Anmeldetag: 14.12.2011
(51) Int. Cl.: F02D 35/02, F02M 57/00, F02D 41/40

(54) **VERFAHREN ZUR ERKENNUNG VON IRREGULÄREN VERBRENNUNGSVORGÄNGEN BEI EINER VERBRENNUNGSKRAFTMASCHINE**
METHOD FOR DETECTING IRREGULAR COMBUSTION IN AN INTERNAL COMBUSTION ENGINE
PROCÉDÉ DE DÉTECTION DE PROCESSUS DE COMBUSTION IRRÉGULIERS DANS UN MOTEUR À COMBUSTION INTERNE

(30) Priorität: 17.12.2010 DE 102010054997
(43) Veröffentlichungstag der Anmeldung: 23.10.2013
(73) Patentinhaber: IAV GmbH, 10587 Berlin (DE)
(72) Erfinder: GOTTSCHALK, Wolfram, 39112 Magdeburg (DE); LEZIUS, Ulf, 38518 Gifhorn (DE); SCHULTALBERS, Matthias, 38536 Meinersen (DE); TREBESIUS, Samuel, 29399 Wahrenholz (DE)
(74) Vertreter: Fukala, Georg
(86) Internationale Anmeldenummer: PCT/DE2011/002121
(87) Internationale Veröffentlichungsnummer: WO 2012/095076

(56) Entgegenhaltungen:
- EP-A1- 1 854 993
- WO-A1-98/35210

## Beschreibung

Die vorliegende Erfindung betrifft ein Verfahren zur Erkennung von irregulären Verbrennungsvorgängen bei einer Verbrennungskraftmaschine mit den Merkmalen des Patentanspruches 1.

Bei Verbrennungskraftmaschinen mit Fremdzündung kann insbesondere in Verbindung mit einer Hochaufladung eine verstärkte Neigung zu Vorentflammungen vorliegen. Als Vorentflammung wird ein irregulärer Verbrennungsvorgang bezeichnet, bei dem bereits vor Einleitung einer Zündung mittels einer Zündkerze Teile des Kraft-stoff-Luft-Gemisches im Brennraum entflammt werden. Vorentflammungen gehen in der Regel mit einem derart stark erhöhten Brennraumdruck einher, dass Schäden an der Verbrennungskraftmaschine auftreten können. Ebenfalls als irreguläre Verbrennungsvorgänge sind klopfende Verbrennungen vorbekannt, die jedoch dadurch gekennzeichnet sind, dass nach Einleitung einer Zündung mittels einer Zündkerze Teile des noch unverbrannten Kraftstoff-Luft-Gemisches selbstentflammt werden, wobei die nunmehr vorliegenden vermehrten Flammenfronten aufeinandertreffen und die für klopfende Verbrennungen charakteristischen hochfrequenten Zylinderdruck-Schwingungen verursachen. Vorentflammungen treten gegebenenfalls bereits in der Kompressionsphase auf. Die Ursachen für Vorentflammungen sind vielschichtig. Bekannte Ursachen, die einzeln oder in Kombination miteinander zu Vorentflammungen führen, sind Selbstentzündungen an heißen exponierten Stellen im Brennraum, Ladungsinhomogenitäten und ein gesteigertes Temperaturniveau im Brennraum. Einfluss auf Vorentflammungen haben u. a. die Parameter des Ladungswechsels, wie Steuerzeiten, die Kraftstoffmenge bzw. das Verbrennungsluftverhältnis, der Ladedruck, die Zündwinkeleinstellung oder Parameter der Abgasrückführung. Fremdinduzierte Vorentflammungen, d. h. weder rein reaktionskinetisch, noch durch die aktive Zündung ausgelöste Verbrennungen, werden auch als Glühzündungen bezeichnet. Für einen sicheren Betrieb einer Verbrennungskraftmaschine ist es erforderlich, jede Vorentflammung, sowohl reaktionskinetisch, als auch fremdinduziert ausgelöste, zu erkennen, um sofort Gegenmaßnahmen einzuleiten und weitere Vorentflammungen zu vermeiden.

Aus der DE102007024415B3 ist ein Verfahren zur Erkennung von Vorentflammungen vorbekannt, dem eine kombinierte Auswertung des Drehgeschwindigkeitssignals der Kurbelwelle und des Signals eines Klopfsensors zu Grunde liegt. Ist die Drehgeschwindigkeit der Kurbelwelle in der Kompressionsphase gegenüber einem Vergleichswert vermindert und zeigt das Signal des Klopfsensors eine klopfende Verbrennung an, wird auf eine Vorentflammung geschlossen. Dieses Verfahren geht von der Annahme aus, dass eine Vorentflammung/Glühzündung ähnliche hochfrequente Druckschwingungen im Brennraum erzeugt, wie eine klopfende Verbrennung. Versuche haben gezeigt, dass diese Annahme nicht immer zutrifft, also eben keine hochfrequenten Schwingungen mit einer Vorentflammung einhergehen. Außerdem ist die Auswirkung einer Vorentflammung auf das Drehgeschwindigkeitssignal der Kurbelwelle gering und insbesondere bei hoher Drehgeschwindigkeit der Kurbelwelle ist eine Detektion von Vorentflammungen äußert schwierig oder sogar unmöglich, da die Störungen auf dem Drehgeschwindigkeitssignal stark zunehmen.

Es ist Aufgabe der vorliegenden Erfindung, unabhängig von der Annahme, dass eine Vorentflammung/Glühzündung ähnliche hochfrequente Druckschwingungen im Brennraum erzeugt, wie eine klopfende Verbrennung und unabhängig von einer Betrachtung der Drehgeschwindigkeit der Kurbelwelle, eine Erkennung jeder Vorentflammung/Glühzündung sicherzustellen.

Diese Aufgabe wird mittels eines Verfahrens mit den Merkmalen des Patentanspruches 1 gelöst.

Erfindungsgemäß wird ein Verfahren zur Erkennung von irregulären Verbrennungen bei einer Verbrennungskraftmaschine vorgeschlagen, wobei die Verbrennungskraftmaschine einen Injektor umfasst, wobei mittels des Injektors Kraftstoff direkt dem Brennraum eines Zylinders der Verbrennungskraftmaschine zugeführt wird, wobei der Injektor mit einer Kraftstoffzufuhrleitung verbunden ist, wobei die Kraftstoffzufuhrleitung einen Drucksensor zur Messung des Druckes in der Kraftstoffzufuhrleitung umfasst, wobei in Abhängigkeit des gemessenen Druckes, der während einer Zufuhr von Kraftstoff in den Brennraum in der Kraftstoffzufuhrleitung vorherrscht, bestimmt wird, ob eine irreguläre Verbrennung vorliegt oder nicht. Erfindungsgemäß wird demgemäß der Effekt genutzt, dass während der Zufuhr von Kraftstoff in den Brennraum eine Verbindung zwischen dem Brennraum und der Kraftstoffzufuhrleitung besteht und über den Kraftstoff eine Information über den Druck, der in dem Brennraum vorherrscht, in die Kraftstoffzufuhrleitung übertragen und von dem dort angeordneten Drucksensor erfasst werden kann und einer weiteren Auswertung zur Verfügung steht. Insbesondere besteht erfindungsgemäß bei Einspritzereignissen gegen Ende der Kompressionsphase bis zum so genannten Zünd-OT (ZOT) die Möglichkeit, jeweils den Druckabfall, der sich bei jeder einzelnen Zufuhr von Kraftstoff in den Brennraum in der Kraftstoffzufuhrleitung einstellt, z. B. bei aufeinanderfolgenden Zufuhrvorgängen von Kraftstoff in den Brennraum für einzelne Arbeitsspiele zu betrachten und in Abhängigkeit von Änderungen des Druckabfalls, insbesondere bei zwei aufeinanderfolgenden Zufuhrvorgängen für zwei aufeinanderfolgende Arbeitsspiele, z. B. dann darauf zu schließen, dass eine irreguläre Verbrennung vorliegt, wenn der Druckabfall bei dem aktuellen Arbeitsspiel um einen bestimmten Wert geringer ausfällt als bei dem davorliegenden Arbeitsspiel, da eine Vorentflammun aufgetreten ist, die einen starken Anstieg des Druckes im Brennraum zur Folge hat. Natürlich kann der Druckabfall in der Kraftstoffzufuhrleitung bei dem Vorliegen einer Vorentflammung auch vollständig ausbleiben beziehungsweise kann sogar eine Druckerhöhung in der Kraftstoffzufuhrleitung infolgedessen auftreten. Wie allgemein bekannt, kann die Zufuhr von Kraftstoff mit den zur Verfügung stehenden schnellen Injektoren in mehreren Teilmengen erfolgen. Daher ist es in einer bevorzugten Ausführung der vorliegenden Erfindung vorgesehen, dass zur Erkennung einer irregulären Verbrennung in dem Brennraum, neben der eigentlichen Zufuhr von Kraftstoff in den Brennraum in einer oder mehreren Teilmengen, um ein bestimmtes Verbrennungsluftverhältnis einzustellen, eine zusätzliche Zufuhr einer Teilmenge von Kraftstoff in den Brennraum erfolgt, wobei in Abhängigkeit des gemessenen Druckes, der während der zusätzlichen Zufuhr von Kraftstoff in den Brennraum in der Kraftstoffleitung vorliegt, bestimmt wird, ob eine irreguläre Verbrennung vorliegt oder nicht. Diese zusätzliche Teilmenge, die quasi einer diagnostischen Zufuhr von Kraftstoff in den Brennraum entspricht, ist bevorzugt nur sehr klein und muss nicht zur eigentlichen Einstellung des jeweils geforderten Verbrennungsluftverhältnisses dienen, kann aber mit in diese Einstellung einfließen, beispielsweise kann diese Zusatzmenge zur Bestimmung des Brennraumdruckes stets einen bestimmten Prozentsatz der für die Einstellung eines bestimmten Verbrennungsluftverhältnisses notwendigen Menge an Kraftstoff betragen. Erfindungsgemäß erfolgt also während der eigentlichen Zufuhr von Kraftstoff oder bevorzugt zusätzlich zur eigentlichen Zufuhr von Kraftstoff in den Brennraum bzw. bei einer Verbrennungskraftmaschine mit mehreren Zylindern selbstverständlich jedem der Zylinder, eine Bestimmung der Druckverhältnisse im Brennraum indirekt über den Druck in der Kraftstoffzufuhrleitung, wobei anhand des sich im gemessenen Druck in der Kraftstoffzufuhrleitung niederschlagenden Brennraumdruckes bestimmt wird, ob eine irreguläre Verbrennung vorliegt oder nicht. Die eigentliche Zufuhr von Kraftstoff in den Brennraum, durch mindestens ein Öffnen und mindestens ein Schließen des Injektors ist in der Regel vor dem Erreichen des oberen Totpunktes, in dessen Umgebung eine Zündung des Kraftstoff-Luft-Gemisches erfolgt, also des so genannten Zünd-OT's (ZOT), abgeschlossen, wobei im weiteren Verlauf im Bereich des ZOT ein Zünden des Kraftstoff-Luft-Gemisches erfolgt. Bei hoher Belastung der Verbrennungskraftmaschine, also einem hohen Ladedruck und einem hohen Temperaturniveau aller beteiligten Medien und brennraumangrenzenden Bauteile liegen die kritischen Bedingungen vor, bei denen Vorentflammungen bzw. Glühzündungen auftreten können, wobei außerdem, bedingt durch die hohe Wahrscheinlichkeit des Auftretens klopfender Verbrennungen, der Zündzeitpunkt im oder nach dem ZOT liegt, so dass eine erfindungsgemäße zusätzliche Zufuhr von Kraftstoff in den Brennraum bevorzugt im ZOT oder in einem Bereich kurz vor und kurz nach ZOT liegt. Wie aus dem Stand der Technik bekannt, siehe beispielsweise DE102006003265A1, kann für jeden Betriebspunkt der Verbrennungskraftmaschine der so genannte Kompressionsdruckverlauf im Steuergerät mitgerechnet werden und steht für die Auswertung der Druckdifferenz zwischen dem Brennraum und der Kraftstoffzufuhrleitung, zur Bestimmung, ob eine irreguläre Verbrennung vorliegt oder nicht, zur Verfügung. Aktuell ausgeführte Verbrennungskraftmaschinen mit mehreren Zylindern haben zumindest für Gruppen einzelner Zylinder gemeinsame Kraftstoffzufuhrleitungen (Common Rail), wobei in der jeweiligen gemeinsamen Leitung ein Drucksensor angeordnet ist, mit dem es möglich ist, den Druck in der Leitung hochaufgelöst zu erfassen und so den durch die Zufuhr von Kraftstoff in den Zylinder bedingten Druckabfall genau zu erfassen, siehe beispielsweise DE19740608C2 und der erfindungsgemäßen Erkennung irregulärerer Verbrennungen bereitzustellen. Erfindungsgemäß vorteilhaft kann dieses Verfahren unabhängig von der Drehgeschwindigkeit der Kurbelwelle erfolgen. Die Einbindung einer erfindungsgemäßen diagnostischen Zufuhr von Kraftstoff in den Brennraum kann problemlos in ein bestehendes Kraftstoffzufuhrmuster integriert werden oder es wird einfach eine sehr kleine und unbedeutende Zufuhr an Kraftstoff an den eigentlichen Kraftstoffzufuhrvorgang hinten angestellt, wobei lediglich die Zeitfenster zur Druckmessung in der Kraftstoffzufuhrleitung, ggf. die Berechnung des Kompressionsdruckverlaufes oder Ausschnitten davon, und die Auswertung geeignet aufeinander abgestimmt werden müssen, was für den Fachmann kein Problem darstellt. Außerdem ist das erfindungsgemäße Verfahren unabhängig davon, ob eine Vorentflammung mit hochfrequenten Schwingungen einhergeht oder nicht. Ferner kann das erfindungsgemäße Verfahren einfach mit den bestehenden Verfahren, also der Segmentzeitbetrachtung und/oder der Klopfsignalbetrachtung verknüpft werden, so dass die Sicherheit der Erkennung weiter gesteigert wird. Von Vorteil ist es außerdem, dass durch eine Analyse der Druckverhältnisse in der Kraftstoffzufuhrleitung während einer Zufuhr von Kraftstoff in den Brennraum eine Quantifizierung der irregulären Verbrennung erfolgen kann, also zumindest eine Klassifizierung, beispielsweise in die drei Klassen stark/mittel/schwach.

Weitere vorteilhafte Ausgestaltungen der vorliegenden Erfindung sind den abhängigen Patentansprüchen und dem nachfolgenden Ausführungsbeispiel zu entnehmen.

Hierbei zeigen:
- Figur 1:: schematische Darstellung einer Verbrennungskraftmaschine,
- Figur 2a bis 2c:: schematische Darstellung der Ansteuerung eines Injektors und des Druckes in der Kraftstoffzufuhrleitung,
- Figur 3a bis 3c:: weitere schematische Darstellung der Ansteuerung eines Injektors und des Druckes in der Kraftstoffzufuhrleitung.

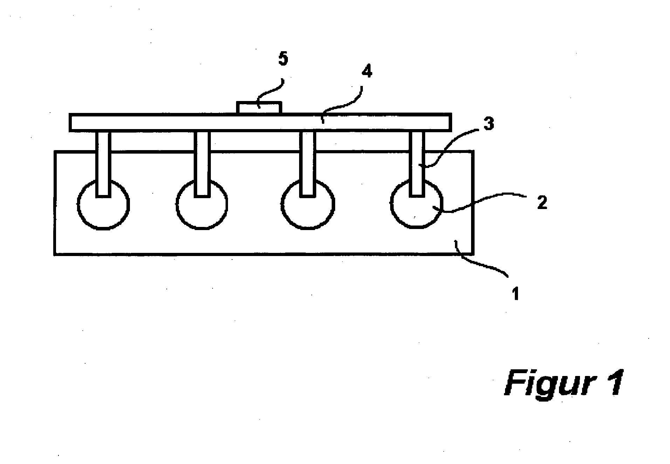

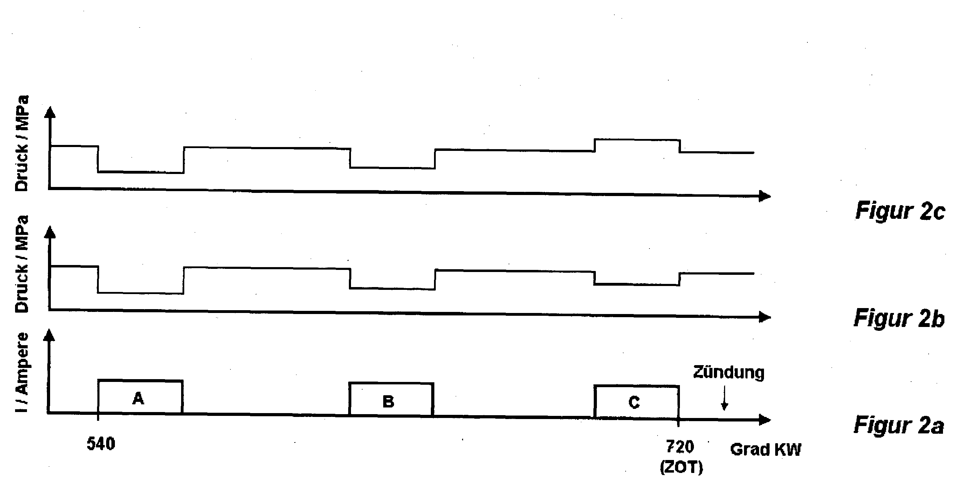

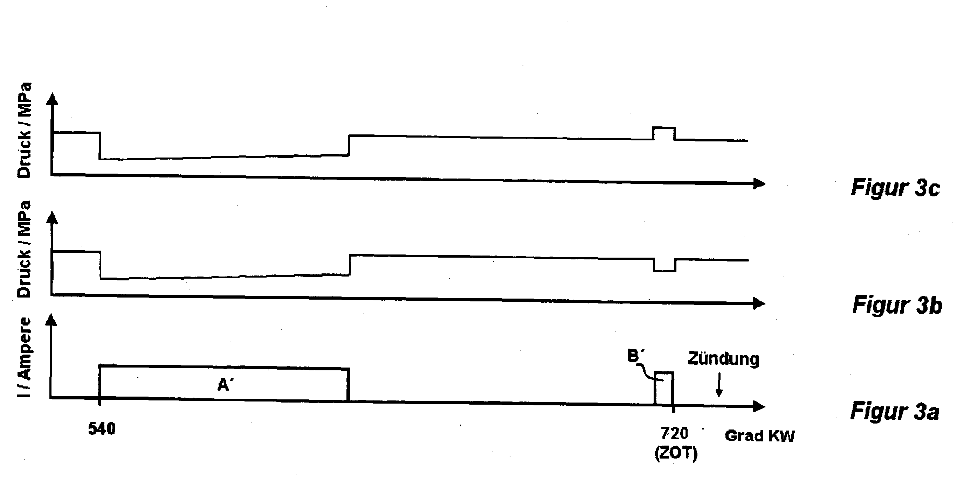

Wie in Figur 1 gezeigt, kann eine bekannte Verbrennungskraftmaschine 1 mehrere Zylinder 2 umfassen. Jedem Zylinder 2 ist ein Injektor 3 zugeordnet. Über eine Kraftstoffzufuhrleitung 4, die hier als so genannte "Common Rail" ausgeführt ist, werden die Injektoren 3 mit Kraftstoff versorgt. Die Injektoren 3 stehen mit den Zylindern 2 bzw. den Brennräumen in Verbindung, so dass Kraftstoff direkt in die Zylinder 2 gefördert werden kann. Bevorzugt sind die Injektoren 3 mit Piezoaktoren versehen, die bekanntlich sehr schnell ansprechen und so eine Mehrfacheinspritzung von Kraftstoff in die Zylinder 2 erfolgen kann. In der Kraftstoffzufuhrleitung 4 ist ein Drucksensor 5 angeordnet, mit dem, wie beispielsweise aus der DE19740608C2 vorbekannt, hochaufgelöst der Kraftstoffdruck gemessen werden kann, also z. B. mit einer Auflösung von 1 Grad Kurbelwinkel. Die Verbrennungskraftmaschine 1 wird in Verbindung mit einem nicht weiter dargestellten, bekannten Steuergerät betrieben. Das Steuergerät ist natürlich mit dem Drucksensor 5 verbunden. Auch die Injektoren 3 sind mit dem Steuergerät verbunden. Wie in Figur 2a dargestellt, kann beispielsweise während des Kompressionstaktes eines Zylinders 2, also zwischen 540 Grad und 720 Grad Kurbelwinkel (KW) beim Viertaktverfahren, eine Zufuhr von Kraftstoff direkt in den Zylinder 2 in mehreren Teilmengen A, B und C erfolgen, beispielsweise um ein Verbrennungsluftverhältnis von Lambda = 0,9 in einem Voillastbetriebspunkt einzustellen. Figur 2a zeigt dabei das Ansteuersignal eines Injektors 3, beispielsweise den Ansteuerstrom I in Ampere über dem Kurbelwinkel. Gemäß Figur 2a hat jede Teilmenge A, B und C einen gleichen Anteil, nämlich 33,33 % der Gesamtmenge. Die Teilmenge C ist im Bereich von 720 Grad Kurbelwinkel gelagert, so dass gemäß einer Ausführung der vorliegenden Erfindung während der Zufuhr der Teilmenge C eine Prüfung erfolgen kann, ob eine Vorentflammung erfolgt ist oder nicht. Wie in Figur 2b gezeigt, tritt mit jeder Ansteuerung des Injektors 3 ein Druckabfall in der Kraftstoffzufuhrleitung 4 auf. Figur 2b zeigt den Verlauf des Druckes in der Kraftstoffzufuhrleitung 4 über dem Kurbelwinkel. Dieser Druckabfall hat für den Fall, dass die Verbrennungskraftmaschine 1 in einem stationären Betriebspunkt mit gleichbleibendem Verbrennungsluftverhältnis betrieben wird, betrachtend die einzelnen Teilmengen A, B und C, für aufeinanderfolgende Arbeitsspiele, den gleichen oder zumindest nahezu gleichen Betrag. In Figur 2b ist zu erkennen, dass der Druckabfall bei der Zufuhr der Teilmenge A größer ist als bei der Teilmenge B und C, da der Druck in dem Zylinder 2 immer größer wird, je mehr der Kolben sich dem ZOT nähert. Eine Zündung des Kraftstoff-Luft-Gemisches mittels einer Zündkerze ist hier nach ZOT vorgesehen, wie in Figur 2a mit einem Pfeil angedeutet. Figur 2c zeigt nun den Verlauf des Druckes in der Kraftstoffzufuhrleitung 4 für ein nachfolgendes Arbeitsspiel, wobei alle Parameter, insbesondere betreffend die Ansteuerung des Injektors 3, gleich sind, jedoch eine Vorentflammung aufgetreten ist, also eine Selbstzündung vor Erreichen des ZOT und vor der eigentlichen Zündung erfolgt ist. Der Druckabfall in der Kraftstoffzufuhrleitung 4 bei der Zufuhr der Teilmengen A und B ist gleich dem vorangegangenen Arbeitsspiel. Erfindungsgemäß gibt jedoch der Druckverlauf während der Zufuhr der Teilmenge C im Vergleich mit dem vorangegangenen Arbeitsspiel Aufschluss über die Vorentflammung, da sich kein Druckabfall mit einem vergleichbaren Betrag einstellt, sondern sich vielmehr eine Druckerhöhung in der Kraftstoffzufuhrleitung 4 einstellt, während der Zufuhr der Teilmenge C. Diese Erkennung einer Vorentflammung kann erfindungsgemäß mit weiteren Verfahren kombiniert werden, beispielsweise einer Drehgeschwindigkeitsanalyse der Kurbelwelle und/oder einer Analyse des Klopfsensorsignals. Angenommen es wurde allein oder in Verbindung mit den vorgenannten Verfahren eine irreguläre Verbrennung erkannt, dann können nun Gegenmaßnahmen eingeleitet werden, wie beispielsweise eine Senkung des Ladedruckes. Erfindungsgemäß kann z. B. auch betriebspunktabhängig ein Schwellenwert für den Druckabfall in der Kraftstoffdruckleitung 4 vorgegeben werden, bei dessen Verletzung ebenfalls auf eine Vorentflammung geschlossen werden kann. Abweichend von der eben beschriebenen Ausführung, wo die Prüfung, ob eine Vorentflammung vorliegt oder nicht, während der Zufuhr einer Teilmenge von Kraftstoff direkt in den Zylinder 2 erfolgt, die sowieso zur Einstellung eines bestimmten Verbrennungsluftverhältnisses dem Zylinder 2 zugeführt werden muss, kann auch eine zusätzliche - quasi diagnostische - Zufuhr von Kraftstoff in den Zylinder 2 erfolgen. Hierzu zeigt Figur 3a, dass lediglich eine zusammenhängende Teilmenge A' von Kraftstoff zur Einstellung eines bestimmten Verbrennungsluftverhältnisses dem Zylinder 2 zugeführt wird. Entsprechend der Zufuhr dieser Teilmenge erfolgt ein Druckabfall in der Kraftstoffzufuhrleitung 4, wie in Figur 3b gezeigt. Erfindungsgemäß findet im Bereich des ZOT die Zufuhr einer weiteren sehr kleinen Menge B' von Kraftstoff in den Zylinder 2 statt, um eine Information über den Druck im Zylinder 2 und so über das mögliche Auftreten von irregulären Verbrennungen zu erhalten. Wie in Figur 3b gezeigt, verursacht auch diese Zufuhr einen gewissen Druckabfall in der Kraftstoffzufuhrleitung 4. Angenommen es tritt bei dem auf die Darstellung in Figur 3b folgenden Arbeitsspiel nach der Zufuhr der Teilmenge A' und vor Erreichen des ZOT eine Vorentflammung auf, dann zeigt sich gemäß Figur 3c ein im Vergleich zum vorherigen Arbeitsspiel stark verändertes Verhalten im Kraftstoffdruck, nämlich kein Druckabfall mehr, sondern sogar ein Druckanstieg. Auch die mittels dieser Ausführung erkannten Vorentflammungen können mit den aus dem Stand der Technik vorbekannten Verfahren verknüpft werden, um eine noch sichere Erkennung zu gewährleisten. Auch bei diesem Ausführungsbeispiel muss nicht unbedingt eine Gegenüberstellung der Druckwerte während der Zufuhr der Diagnosemenge an Kraftstoff in den Zylinder 2 für aufeinanderfolgende Arbeitsspiele erfolgen. Es kann auch eine Betrachtung der Verletzung beliebiger Schwellenwerte oder bestimmter Muster im Kraftstoffdruckverlauf während der Einspritzung zur Erkennung von Vorentflammungen erfolgen. Unabhängig von den verschiedenen oben genannten Ausführungen kann eine Zündung mittels einer Zündkerze auch zeitlich vor dem ZOT erfolgen, wobei natürlich dann die jeweils zur Erkennung von Vorentflammungen zu analysierende Kraftstoffzufuhr dementsprechend zeitlich vor den Zündzeitpunkt gelegt werden muss. Die Lage der Kraftstoffzufuhr, bei der eine Auswertung des Druckes in der Kraftstoffzufuhrleitung 4 erfolgt, in Bezug auf den Kurbelwinkel und den ZOT ist beliebig. Praktisch wird es besonders sinnvoll sein, im Bereich des ZOT zu arbeiten. Zur erfindungsgemäßen Bewertung des Drucks in der Kraftstoffzufuhrleitung 4 kann auch ein berechneter Kompressionsdruck herangezogen werden. Insbesondere kann mittels des berechneten Kompressionsdruckes in dem Zylinder 2 während der Zufuhrphase von Kraftstoff, bei welcher eine Analyse des Druckes in der Kraftstoffzufuhrleitung 4 zur Erkennung von Vorentflammungen erfolgt und anhand der Durchflusscharakteristik des Injektors 3 sowie der aus der Kraftstoffzufuhrleitung 4 entnommenen Menge an Kraftstoff ein zu erwartender Druckabfall berechnet werden, wobei wenn dieser nicht eintritt, eben auf eine Vorentflammung geschlossen werden kann. Erfindungsgemäß kann die Auswertung des Druckes in der Kraftstoffzufuhrleitung 4, bei einer Zufuhr von Kraftstoff in einen Brennraum, mit bestehenden Verfahren, wie einer Segmentzeitbetrachtung und/oder einer Klopfsignalbetrachtung verknüpft werden. Angenommen eine irreguläre Verbrennung tritt bei einem Arbeitsspiel auf und diese kann anhand einer Betrachtung des Klopfsignals erkannt werden und es erfolgt die Einleitung von Maßnahmen zur Verhinderung von irregulären Verbrennungen, beispielsweise eine Senkung des Ladedruckes und/oder ein Erhöhen des Kraftstoffanteils am Kraftstoff-Luft-Gemisch beim darauf folgenden Arbeitsspiel, kann erfindungsgemäß bei dem folgenden Arbeitsspiel oder mehreren folgenden Arbeitsspielen die erfindungsgemäße Auswertung des Druckes in der Kraftstoffzufuhrleitung 4, bei einer Zufuhr von Kraftstoff in einen Brennraum, beziehungsweise eine zusätzliche diagnostische Zufuhr von Kraftstoff erfolgen. Hintergrund dieses Verfahrens ist, dass im Rahmen von Untersuchungen festgestellt werden konnte, dass ausgehend von einer ersten irregulären Verbrennung, die gegebenenfalls mit auswertbaren hochfrequenten Schwingungen einhergeht, häufig bei nachfolgenden Arbeitsspielen ebenfalls irreguläre Verbrennungen auftreten, bei denen jedoch die hochfrequenten Schwingungsanteile deutlich zurückgehen oder sogar ausbleiben, so dass mittels des vorgeschlagenen Verfahrens nach einer mittels einer Segmentzeitbetrachtung und/oder einer Klopfsignalbetrachtung erkannten irregulären Verbrennung und eingeleiteten Maßnahmen zur Verhinderung irregulärer Verbrennungen bei nachfolgenden Arbeitsspielen eine Auswertung des Druckes in der Kraftstoffzufuhrleitung 4 bei einer Zufuhr von Kraftstoff in einen Brennraum erfolgt, die unabhängig von auftretenden Druckschwingungen ist und somit bei nachfolgenden Arbeitsspielen für eine sichere Erkennung möglicher weiterer irregulärer Verbrennungen dient.

## Patentansprüche

1. Verfahren zur Erkennung von irregulären Verbrennungen bei einer Verbrennungskraftmaschine, wobei mittels eines Injektors Kraftstoff direkt dem Brennraum eines Zylinders der Verbrennungskraftmaschine zugeführt wird, wobei der Injektor mit einer Kraftstoffzufuhrleitung verbunden ist, wobei die Kraftstoffzufuhrleitung einen Drucksensor zur Messung des Druckes in der Kraftstoffzufuhrleitung umfasst, wobei in Abhängigkeit des gemessenen Druckes, der während einer Zufuhr von Kraftstoff in den Brennraum in der Kraftstoffzufuhrleitung vorherrscht, bestimmt wird, ob eine irreguläre Verbrennung vorliegt oder nicht.

2. Verfahren nach Patentanspruch 1, wobei die Erkennung von irregulären Verbrennungen in Abhängigkeit von dem Druckabfall erfolgt, der sich bei einer Zufuhr von Kraftstoff in den Brennraum in der Kraftstoffzufuhrleitung einstellt.

3. Verfahren nach Patentanspruch 2, wobei die Erkennung von irregulären Verbrennungen in Abhängigkeit von dem Druckabfall erfolgt, der sich bei aufeinanderfolgenden Arbeitsspielen bei einer Zufuhr von Kraftstoff in den Brennraum in der Kraftstoffzufuhrleitung einstellt.

4. Verfahren nach Patentanspruch 3, wobei dann darauf geschlossen wird, dass eine irreguläre Verbrennung vorliegt, wenn der Druckabfall bei dem aktuellen Arbeitsspiel um einen bestimmten Wert geringer ausfällt, als bei dem davorliegenden Arbeitsspiel.

5. Verfahren nach Patentanspruch 1, wobei die Zufuhr von Kraftstoff in den Brennraum mittels des Injektors in mehreren Teilmengen erfolgt, um ein bestimmtes Verbrennungsluftverhältnis einzustellen, wobei in Abhängigkeit des gemessenen Druckes, der während der Zufuhr einer der Teilmengen von Kraftstoff in den Brennraum in der Kraftstoffzufuhrleitung vorherrscht, bestimmt wird, ob eine irreguläre Verbrennung vorliegt oder nicht.

6. Verfahren nach Patentanspruch 1, wobei zusätzlich zu der Zufuhr von Kraftstoff in den Brennraum mittels des Injektors in einer oder mehreren Teilmengen, um ein bestimmtes Verbrennungsluftverhältnis einzustellen, eine weitere Zufuhr von Kraftstoff in den Brennraum erfolgt, wobei in Abhängigkeit des gemessenen Druckes, der während dieser weiteren Zufuhr von Kraftstoff in den Brennraum in der Kraftstoffzufuhrleitung vorherrscht, bestimmt wird, ob eine irreguläre Verbrennung vorliegt oder nicht.

7. Verfahren nach Patentanspruch 1 bis 6, wobei wenn bestimmt wurde, dass eine irreguläre Verbrennung vorliegt, weiterhin geprüft wird, ob eine Änderung der Drehgeschwindigkeit der Kurbelwelle der Verbrennungskraftmaschine vorliegt, die auf eine irreguläre Verbrennung hinweist und/oder das Signal eines Klopfsensors eine klopfende Verbrennung anzeigt.

8. Verfahren nach Patentanspruch 1, wobei in Abhängigkeit der Analyse der Druckverhältnisse in der Kraftstoffzufuhrleitung während einer Zufuhr von Kraftstoff in den Brennraum eine Quantifizierung der irregulären Verbrennung erfolgt.

9. Verfahren nach Patentanspruch 1 bis 6 und 8, wobei die Bestimmung, ob eine irreguläre Verbrennung vorliegt oder nicht, in Abhängigkeit des gemessenen Druckes, der während einer Zufuhr von Kraftstoff in den Brennraum in der Kraftstoffzufuhrleitung vorherrscht, zeitlich nach einer Bestimmung, ob eine irreguläre Verbrennung vorliegt oder nicht, in Abhängigkeit von einer Analyse der Drehgeschwindigkeit der Kurbelwelle der Verbrennungskraftmaschine und/oder in Abhängigkeit von einer Analyse des Signals eines Klopfsensors erfolgt, wobei wenn mittels der Analyse der Drehgeschwindigkeit der Kurbelwelle der Verbrennungskraftmaschine und/oder der Analyse des Signals eines Klopfsensors eine irreguläre Verbrennung erkannt wurde, bei einem oder mehreren nachfolgenden Arbeitsspielen eine Bestimmung, ob eine irreguläre Verbrennung vorliegt oder nicht, in Abhängigkeit des gemessenen Druckes, der während einer Zufuhr von Kraftstoff in den Brennraum in der Kraftstoffzufuhrleitung vorherrscht, erfolgt.

## Claims

1. Method for recognising irregular combustion in an internal combustion engine, wherein by means of an injector fuel is supplied directly to the combustion chamber of a cylinder of the internal combustion engine, wherein the injector is connected to a fuel supply line, wherein the fuel supply line comprises a pressure sensor for measuring the pressure in the fuel supply line, wherein depending upon the measured pressure prevailing during supply of fuel into the combustion chamber in the fuel supply line it is ascertained whether or not irregular combustion is occurring.

2. Method according to Claim 1, wherein the recognition of irregular combustion takes place depending upon the pressure drop which occurs upon supply of fuel into the combustion chamber in the fuel supply line.

3. Method according to Claim 2, wherein the recognition of irregular combustion takes place depending upon the pressure drop which occurs upon successive combustion cycles upon supply of fuel into the combustion chamber in the fuel supply line.

4. Method according to Claim 3, wherein it is then concluded that irregular combustion is occurring if the pressure drop in the current combustion cycle turns out to be smaller by a certain value than in the combustion cycle before it.

5. Method according to Claim 1, wherein the supply of fuel into the combustion chamber by means of the injector takes place in a plurality of partial quantities in order to set a certain combustion-air ratio, wherein depending upon the measured pressure prevailing during the supply of one of the partial quantities of fuel into the combustion chamber in the fuel supply line it is ascertained whether or not irregular combustion is occurring.

6. Method according to Claim 1, wherein in addition to the supply of fuel into the combustion chamber by means of the injector in one or more partial quantities in order to set a certain combustion-air ratio, a further supply of fuel into the combustion chamber takes place, wherein depending upon the measured pressure prevailing during this further supply of fuel into the combustion chamber in the fuel supply line it is ascertained whether or not irregular combustion is occurring.

7. Method according to Claims 1 to 6, wherein if it has been ascertained that an irregular combustion is occurring, a check is furthermore made whether a change in the rate of rotation of the crankshaft of the internal combustion engine is occurring, which indicates irregular combustion, and/or the signal of a knock sensor indicates knocking combustion.

8. Method according to Claim 1, wherein quantification of the irregular combustion takes place depending upon the analysis of the compression ratios in the fuel supply line during supply of fuel into the combustion chamber.

9. Method according to Claims 1 to 6 and 8, wherein the ascertaining of whether or not irregular combustion is occurring depending upon the measured pressure prevailing during supply of fuel into the combustion chamber in the fuel supply line takes place chronologically after ascertaining whether or not irregular combustion is occurring depending upon an analysis of the rate of rotation of the crankshaft of the internal combustion engine and/or depending upon an analysis of the signal of a knock sensor, wherein if irregular combustion has been recognised by means of the analysis of the rate of rotation of the crankshaft of the internal combustion engine and/or the analysis of the signal of a knock sensor, in one or a plurality of subsequent combustion cycles ascertaining of whether or not irregular combustion is occurring depending upon the measured pressure prevailing during supply of fuel into the combustion chamber in the fuel supply line takes place.

## Revendications

1. Procédé de détection de combustions irrégulières dans un moteur à combustion interne, du carburant étant acheminé au moyen d'un injecteur directement à la chambre de combustion d'un cylindre du moteur à combustion interne, l'injecteur étant connecté à une conduite d'alimentation en carburant, la conduite d'alimentation en carburant comprenant un capteur de pression pour mesurer la pression dans la conduite d'alimentation en carburant, et où, en fonction de la pression mesurée qui règne dans la conduite d'alimentation en carburant pendant une alimentation en carburant dans la chambre de combustion, on détermine si une combustion irrégulière a lieu ou pas.

2. Procédé selon la revendication 1, dans lequel la détection de combustions irrégulières a lieu en fonction de la chute de pression qui s'établit dans la conduite d'alimentation en carburant dans le cas d'une alimentation en carburant dans la chambre de combustion.

3. Procédé selon la revendication 2, dans lequel la détection de combustions irrégulières a lieu en fonction de la chute de pression qui s'établit dans la conduite d'alimentation en carburant dans le cas de cycles de travail successifs dans le cas
d'une alimentation en carburant dans la chambre de combustion.

4. Procédé selon la revendication 3, dans lequel on conclut ensuite qu'une combustion irrégulière a lieu si la chute de pression dans le cas du cycle de travail actuel s'avère être inférieure d'une certaine valeur à celle dans le cas du cycle de travail précédent.

5. Procédé selon la revendication 1, dans lequel l'alimentation en carburant dans la chambre de combustion au moyen de l'injecteur s'effectue en plusieurs quantités partielles afin d'ajuster un certain rapport d'air comburant, et où l'on détermine, en fonction de la pression mesurée qui règne dans la conduite d'alimentation en carburant pendant l'alimentation en l'une des quantités partielles de carburant dans la chambre de combustion, si une combustion irrégulière a lieu ou pas.

6. Procédé selon la revendication 1, dans lequel, en plus de l'alimentation en carburant dans la chambre de combustion au moyen de l'injecteur en une ou plusieurs quantités partielles, afin d'ajuster un certain rapport d'air comburant, une alimentation supplémentaire en carburant a lieu dans la chambre de combustion, et où l'on détermine, en fonction de la pression mesurée qui règne dans la conduite d'alimentation en carburant pendant cette alimentation supplémentaire en carburant dans la chambre de combustion, si une combustion irrégulière a lieu ou pas.

7. Procédé selon les revendications 1 à 6, dans lequel, lorsque l'on a déterminé qu'une combustion irrégulière avait lieu, on contrôle en outre si une variation de la vitesse de rotation du vilebrequin du moteur à combustion interne a lieu, laquelle indique une combustion irrégulière, et/ou si le signal d'un capteur de détonation indique une combustion détonante.

8. Procédé selon la revendication 1, dans lequel, en fonction de l'analyse des rapports de pression dans la conduite d'alimentation en carburant pendant une alimentation en carburant dans la chambre de combustion, il se produit une quantification de la combustion irrégulière.

9. Procédé selon les revendications 1 à 6 et 8, dans lequel on détermine si une combustion irrégulière a lieu ou pas, en fonction de la pression mesurée qui règne dans la conduite d'alimentation en carburant pendant une alimentation en carburant dans la chambre de combustion, temporellement après avoir déterminé si une combustion irrégulière a lieu ou pas, en fonction d'une analyse de la vitesse de rotation du vilebrequin du moteur à combustion interne et/ou en fonction d'une analyse du signal d'un capteur de détonation, et si l'on a détecté une combustion irrégulière au moyen de l'analyse de la vitesse de rotation du vilebrequin du moteur à combustion interne et/ou de l'analyse du signal d'un capteur de détonation, on détermine, dans un ou plusieurs cycles de travail successifs, si une combustion irrégulière a lieu ou pas, en fonction de la pression mesurée qui règne dans la conduite d'alimentation en carburant pendant une alimentation en carburant dans la chambre de combustion.
